Europäisches Patentamt

European Patent Office

Office européen des brevets

(19)

(11) Veröffentlichungsnummer: **0 288 587**
**B1**

(12) # EUROPÄISCHE PATENTSCHRIFT

(45) Veröffentlichungstag der Patentschrift:
13.06.90

(51) Int. Cl.⁵: **B60K 15/03**

(21) Anmeldenummer: **87104950.8**

(22) Anmeldetag: **03.04.87**

(54) **Mehrschichttank, insbesondere Kunststoffmehrschichttank, vorzugsweise Kraftstofftank.**

(43) Veröffentlichungstag der Anmeldung:
**02.11.88 Patentblatt 88/44**

(45) Bekanntmachung des Hinweises auf die Patenterteilung:
**13.06.90 Patentblatt 90/24**

(84) Benannte Vertragsstaaten:
**AT BE CH DE ES FR GB GR IT LI LU NL SE**

(56) Entgegenhaltungen:
**EP-A- 0 069 303**
**DE-U- 8 520 156**
**FR-A- 1 514 569**
**FR-A- 2 136 429**
**US-A- 3 519 529**

(73) Patentinhaber: **RHEIN-BONAR KUNSTSTOFF-TECHNIK GMBH, Düsseldorfer Strasse 39,**
**D-6800 Mannheim 81(DE)**

(72) Erfinder: **Beyerle, Dieter, Seckacher Strasse 49,**
**D-6800 Mannheim 51(DE)**

(74) Vertreter: **Ratzel, Gerhard, Dr., Seckenheimer Strasse 36a, D-6800 Mannheim 1(DE)**

**Beschreibung**

Die Erfindung betrifft einen Mehrschichttank, insbesondere Kunststoffmehrschichttank, vorzugsweise Kraftstofftank.

Mehrschichttanks, bei denen die einzelnen Schichten fest bzw. einstückig miteinander verbunden sind, gehören zum Stand der Technik.

So kennt der Stand der Technik beispielsweise Mehrschichttanks, wobei die einzelnen Schichten aus Polyäthylen verschiedener physikalischer Eigenschaften bestehen und die Schichten fest miteinander verbunden sind. Beispielsweise besteht hierbei die Außenschicht aus festem Polyäthylen und die mit der Außenschicht fest verbundene Innenschicht aus Polyäthylenschaum.

Bei einer anderen Ausführungsform des Standes der Technik besteht der Tank aus drei miteinander fest verbundenen Schichten, wobei die Außenschicht und die Innenschicht aus festem Polyäthylen und die dazwischen befindliche Mittelschicht aus Polyäthylenschaum besteht.

Diese drei Schichten sind also fest miteinander verbunden.

Die FR-A 1 514 569 beschreibt einen Mehrschichtkraftstofftank, der zwei Schichten aufweist, die keinen festen Verbund miteinander haben und zwischen denen zumindest teilweise eine Luftspalte, gegebenenfalls sehr geringer Stärke vorhanden ist, auch wenn der Tank (teilweise) gefüllt ist.

Die Mehrschichttanks gemäß dem Stand der Technik gewährleisten nicht das Vorhandensein einer permanenten, die ganzen Tankwände umfassenden Luftspalte.

Demgegenüber liegt vorliegender Erfindung die Aufgabe zugrunde, einen Mehrschichttank zu liefern, der bei allen Schichtflächen eine permanente Luftspalte aufweist und eine erhöhte Wärme- bzw. Kälte-Isolation sowie eine reduzierte Verdunstungs-, Verdampfungs- und Permeationsrate besitzt und verbesserte Sicherheits-Eigenschaften, beispielsweise bezüglich Flamm- und Berst-Schutz aufweist.

Diese Aufgabe wird erfindungsgemäß bei einem Mehrschichttank der eingangs genannten Gattung dadurch gelöst, daß er aus mindestens zwei Schichten besteht, die keinen festen Verbund miteinander haben, wobei zwischen den Tankschichten zumindest teilweise Luftspalte, gegebenenfalls sehr geringer Stärke vorhanden sind, und daß zumindest eine Schicht auf zumindest einer Seite leichte Unebenheiten aufweist, so daß bereits hierdurch die Entstehung von Luftspalten gewährleistet ist.

Besondere Ausführungsformen des erfindungsgemäßen Mehrschichttanks sind dadurch gekennzeichnet, daß die einzelnen Schichten zumindest teilweise aus voneinander verschiedenen Materialien bestehen, daß der Außentank aus einem kälteschlagzähen, thermoplastischen Werkstoff und der Innentank aus einem Werkstoff mit sehr geringer Gasdurchlässigkeit und/oder Flüssigkeitspermeation besteht, daß die Außenschicht, d.h. der Außentank aus Polyäthylen und die Innenschicht, d.h. der Innentank aus Polyamid besteht, daß er aus mehr als zwei Tankschichten besteht, daß er aus drei Tankschichten besteht, daß die Tankaußenschicht (=Außentank) aus Polyäthylen, die mittlere Tankschicht (=Mitteltank) aus einer Isolationsschicht und der Innentank (=innere Tankschicht) aus Polyamid besteht, daß die mittlere Tankschicht (=Mitteltank) aus Polyäthylenschaum besteht, und daß zwischen mindestens zwei Schichten eine Folie angeordnet ist.

Vorliegender Erfindung liegt die überraschende Erkenntnis zugrunde, daß man entgegen den bisherigen Auffassungen einen sowohl bezüglich der sprunghaften Verringerung der Permeationsrate als auch bezüglich der Erhöhung der Wärme- bzw. Kälteisolation als auch bezüglich der Verbesserung der mechanischen Eigenschaften, beispielsweise bei Stoßbeanspruchung, verbesserten Tank dann erhält, wenn man die Einzelschichten, aus denen der Tank besteht, nur in relativ loser Verbindung zueinander anordnet, d.h. in der Weise anordnet, daß zwischen den einzelnen Schichten zumindest teilweise ein Luftspalt verbleibt, der gegebenenfalls sehr dünn sein kann, z. B. nur Bruchteile eines Millimeters, wie z.B. 0,1 mm mißt.

Dieser Luftspalt ist ein überraschend wirksamer Thermoisolator. Es hat sich beispielsweise gezeigt, daß bei Anlegung einer Temperatur von 800°C die Flüssigkeit, die sich im erfindungsgemäßen Tank mit 60 Litern Inhalt befindet, sich nach zwei Minuten nur um 10°C erwärmt; hierbei handelt es sich um den normierten Flammtest nach der ECE R 34-Norm.

Die Flüssigkeitspermeation beim erfindungsgemäßen Tank mit 60 Litern Inhalt, bei dem die Innenschicht aus Polyamid und die durch einen Luftspalt von der Innenschicht getrennte Außenschicht aus Polyäthylen besteht, betrug bei einer Tankinhalts-, also einer Flüssigkeitstemperatur von 40°C nur 0,14 g/24 Stunden. Die Umgebungstemperatur betrug ebenfalls 40°C, die Versuchsdauer betrug 8 Wochen.

Beim Stoßbeanspruchungs-Test bei −40°C gemäß ECE R 34-Norm hat sich gezeigt, daß diese lose Verbindung zwischen Außentank und Innentank bewirkt, daß sich die auf den Außentank auftreffende Stoßenergie sehr wenig auf den Innentank fortsetzt, wobei eine Zerstörung des Innentanks nicht eingetreten ist. Allgemein gesagt, betrifft die Erfindung einen Hohlkörper, beispielsweise zur Aufnahme von aromatischen und aliphatischen Kohlenwasserstoffen, insbesondere auf einen Tank zur Aufnahme von Vergaserkraftstoffen, Dieselkraftstoffen und Lösungsmitteln.

Vorzugsweise besteht also der Außentank aus einem kälteschlagzähen, thermoplastischen Werkstoff, z.B. aus Polyäthylen, und der Innentank aus einem Werkstoff mit der jeweils fachmännisch wählbaren Chemikalienbeständigkeit bezüglich des vorbestimmten Tankinhalts, ferner geringer Gasdurchlässigkeit und einer niedrigen Flüssigkeitspermeation; beispielsweise besteht der Innentank aus Polyamid, das den obigen Forderungen grundsätzlich optimal Rechnung zu tragen in der Lage ist.

Durch den erfindungsgemäßen Hohlkörperaufbau, insbesondere Tankaufbau, haben sich bei zahlreichen Prüfungen die im folgenden aufgelisteten Vorteile gegenüber Kunststofftanks ergeben, die nur entweder einwandig sind oder bei denen im Zweischichtaufbau die Innenschicht mit der Außenschicht chemisch oder mechanisch fest verbunden ist:

Der Erfindungsgegenstand zeichnet sich durch sprunghaft geringere Diffusionswerte aus, als der entsprechende Tank, der nur eine Wandung aus Polyäthylen bestehend, besitzt.

Der erfindungsgemäße Tank zeichnet sich durch eine sprunghaft geringere Aufheizung des Kraftstoffes im Brandfall (Testtemperatur 800°C, Testzeit zwei Minuten) aus, wobei der Wärmedurchgang durch den oder die Luftspalte zwischen dem Innen- und dem Außentank stark verzögert wird, womit die überraschende Isolierwirkung bewiesen ist.

Der erfindungsgemäße Tank zeigt bei Schlageinwirkung einen Schutz des Innentanks dadurch, daß zum Außentank kein fester Verbund besteht, womit insbesondere auch das sogenannte Durchreißen verhindert wird.

Der erfindungsgemäße Tank zeigt auch eine größere Stabilität im Brandfall (Testtemperatur wiederum 800°C, Testzeit zwei Minuten) und zwar dadurch, daß eine Abstützung des Außentanks durch den Innentank erfolgt.

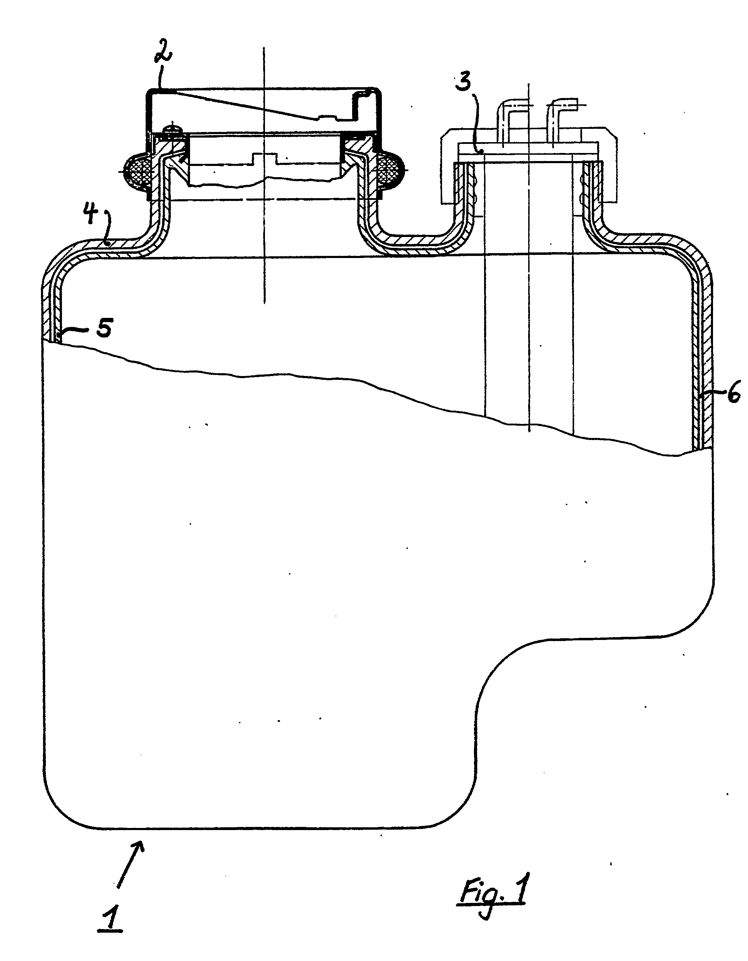

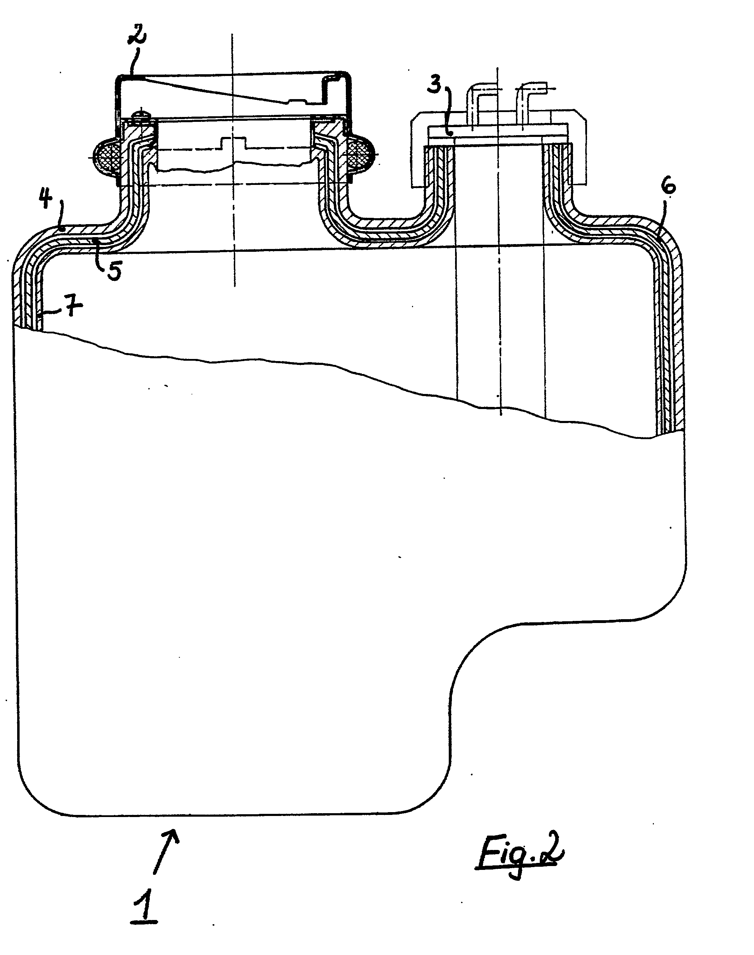

In den beiliegenden Figuren 1 und 2, die bevorzugte Ausführungsformen zeigen, ist das Wesen vorliegender Erfindung weiterhin dargestellt.

Figur 1 zeigt einen sogenannten Zweischichttank;
Figur 2 zeigt einen sogenannten Dreischichttank.

In beiden Figuren sind die gleichen Elemente mit den gleichen Bezugszeichen beziffert.

Mit dem Bezugszeichen 1 ist jeweils die Tankgesamtheit bezeichnet.

Mit dem Bezugszeichen 2 ist der Einfüllstutzen und mit 3 der sogenannte Tankrohrgeber bezeichnet, der aus Einlaß/Entlüftung/Absaugung besteht.

Die weiteren Einzelheiten des Einfüllstutzens und des Tankrohrgebers brauchen hier nicht beschrieben zu werden, da sie zum Stand der Technik gehören.

Bezüglich der Figur 1 gilt, daß die Außentankschicht mit dem Bezugszeichen 4 und die Innentankschicht mit dem Bezugszeichen 5 gekennzeichnet ist, wobei zwischen diesen Schichten ein gegebenenfalls auch sehr enger Luftspalt 6 angeordnet ist.

Die Außentankschicht 4 besteht aus Polyäthylen und die Innentankschicht 5 aus Polyamid.

In Figur 2 ist ein Dreischichttank dargestellt. Die Außenschicht 4 besteht aus Polyäthylen, die Mittelschicht 5 besteht aus Polyamid und die Innenschicht 7 besteht wiederum aus Polyäthylen. Dabei ist die Mittelschicht 5 durch einen gegebenenfalls sehr schmalen Luftspalt vom Außentank 4 und durch einen weiteren ebenfalls gegebenenfalls sehr schmalen Luftspalt von der Innenschicht 7 getrennt.

Infolge gegebenenfalls vorhandener leichter Unebenheiten der einzelnen Tankschichten wird es in der Regel so sein, daß sich die einzelnen Tankschichten an gewissen Stellen soeben ganz schwach berühren, während in überwiegendem Maß die Anordnung des Luftspaltes gewährleistet bleibt.

In der Regel werden alle Schichten des erfindungsgemäßen Mehrschichttanks aus Kunststoffschichten bestehen; jedoch erschöpft sich der Erfindungsgegenstand nicht auf reine Kunststoffschichten; anstelle von reinen Kunststoffschichten können auch Kunststoffschichten mit Armierungen Bestandteil des erfindungsgemäßen Tanks sein; beispielsweise können glasfaserarmierte Kunststoffschichten und/oder geschäumte Kunststoffschichten Bestandteil des erfindungsgemäßen Tanks sein.

Der erfindungsgemäße Tank wird vorzugsweise im Rotationsschmelzverfahren hergestellt.

Nach einer weiteren Ausführungsform können zwischen zwei Schichten des erfindungsgemäßen Tanks Folien angeordnet sein.

## Patentansprüche

1. Mehrschichttank, insbesondere Kunststoffmehrschichttank, vorzugsweise Kraftstofftank, dadurch gekennzeichnet, daß er aus mindestens zwei Schichten besteht, die keinen festen Verbund miteinander haben, wobei zwischen den Tankschichten zumindest teilweise Luftspalte, gegebenenfalls sehr geringer Stärke vorhanden sind, und daß zumindest eine Schicht auf zumindest einer Seite leichte Unebenheiten aufweist, so daß bereits hierdurch die Entstehung von Luftspalten gewährleistet ist.

2. Mehrschichttank nach Anspruch 1, dadurch gekennzeichnet, daß die einzelnen Schichten zumindest teilweise aus voneinander verschiedenen Materialien bestehen.

3. Mehrschichttank nach Anspruch 1 oder 2, dadurch gekennzeichnet, daß der Außentank aus einem kälteschlagzähen, thermoplastischen Werkstoff und der Innentank aus einem Werkstoff mit sehr geringer Gasdurchlässigkeit und/oder Flüssigkeitspermeation besteht.

4. Mehrschichttank nach Anspruch 1–3, dadurch gekennzeichnet, daß die Außenschicht, d.h. der Außentank aus Polyäthylen und die Innenschicht, d.h. der Innentank aus Polyamid besteht.

5. Mehrschichttank nach Anspruch 1–2, dadurch gekennzeichnet, daß er aus mehr als zwei Tankschichten besteht.

6. Mehrschichttank nach Anspruch 5, dadurch gekennzeichnet, daß er aus drei Tankschichten besteht.

7. Mehrschichttank nach Anspruch 6, dadurch gekennzeichnet, daß die Tankaußenschicht (= Außentank) aus Polyäthylen, die mittlere Tankschicht (= Mitteltank) aus einer Isolationsschicht und der Innentank (= innere Tankschicht) aus Polyamid besteht.

8. Mehrschichttank nach Anspruch 7, dadurch gekennzeichnet, daß die mittlere Tankschicht (= Mitteltank) aus Polyäthylenschaum besteht.

9. Mehrschichttank nach Anspruch 1–8, dadurch gekennzeichnet, daß zwischen mindestens zwei Schichten eine Folie angeordnet ist.

## Revendications

1. Réservoir multicouche, en particulier réservoir multicouche en plastiques, de préférence réservoir de carburant, caractérisé par qu'il comprise au moins deux couches n'ayant pas une connexion ferme avec l'existence au moins partiellement des fentes à l'air entre les couches a réservoir le cas échéant d'une épaisseur minime et au moins une couche comporte au moins à un côté des inégalités lors que par ça la création des fentes à l'air est assurée.

2. Réservoir multicouche selon revendication 1, caractérisé par que les couches individuelles consistent au moins de part de matériels différents.

3. Réservoir multicouche selon revendication 1 ou 2, caractérisé par que le réservoir extérieur consiste en matériel tenace à coup-en-froid et thermoplastique et que le réservoir intérieur consiste en matériel avec perméabilité minime aux gases et/ou perméabilité minime aux liquides.

4. Réservoir multicouche selon revendication 1–3, caractérisé par que la couche extérieur, c'est-à-dire le réservoir extérieur consiste en polyéthylène et la couche intérieur, c'est-à-dire le réservoir intérieur consiste en polyamide.

5. Réservoir multicouche selon revendication 1–2, caractérisé par qu'il comporte plus que deux couches de réservoir.

6. Réservoir multicouche selon revendication 5, caractérisé par qu'il comporte trois couches de réservoir.

7. Réservoir multicouche selon revendication 6, caractérisé par que la couche extérieur (= réservoir extérieur) consiste en polyéthylène, la couche intermédiaire (= réservoir intermédiaire) consiste en une couche à l'isolation et le réservoir intérieur (= couche à réservoir intérieur) consiste en polyamide.

8. Réservoir multicouche selon revendication 7, caractérisé par que la couche à réservoir intermédiaire (= réservoir intermédiaire) consiste en mousse à polyéthylène.

9. Réservoir multicouche selon revendication 1–8, caractérisé par qu'entre au moins deux couches une feuille est disposée.

**Claims**

1. Multi layer-tank, particularly synthetic multi layer tank, preferably fuel tank, characterized in that it consists of at least two layers having no firm connection, whereby there are between the tank layers at least partly air slits, possibly of very small width, and at least one layer features at least on one side slight unevenesses, so that already thus the creation of air slits is ascertained.

2. Multi layer tank according to claim 1, characterized in that the individual layers consist at least partly of materials different from each other.

3. Multi layer tank according to claim 1 or 2, characterized in that the outer tank consists of a cold-hit-tenacious thermoplastic material and the inner tank of a material with very small gas permeability and/ or liquid permeability.

4. Multi layer tank according to claim 1–3, characterized in that the outer layer, i.e. the outer tank consists of polyethylen and the inner layer, i.e. the inner tank consists of polyamide.

5. Multi layer tank according to claims 1–2, characterized in that it consists of more than two tank layers.

6. Multi layer tank according to claim 5, characterized in that it consists of three tank layers.

7. Multi layer tank according to claim 6, characterized in that the outer tank layer (= outer tank) consists of polyethylen; the middle tank layer (= middle tank) consists of an isolation layer, and the inner tank (= inner tank layer) consists of polyamide.

8. Multi layer tank according to claim 7, characterized in that the middle tank layer (= middle tank) consists of polyethylen-foam.

9. Multi layer tank according to claim 1–8, characterized in that between at least two layers a foil is arranged.

*Fig. 1*

Fig.2